# EUROPÄISCHE PATENTANMELDUNG

(11) **EP 1 608 193 A1**
(43) Veröffentlichungstag der Anmeldung: **21.12.2005**
(21) Anmeldenummer: 04013955.2
(22) Anmeldetag: 15.06.2004
(51) Int. Cl.: H04Q 7/36

(54) **Zuteilung von Frequenzen in einem Funk-Kommunikationssystem bei Verwendung eines Mehrfachsprungverfahrens**

(71) Anmelder: SIEMENS AKTIENGESELLSCHAFT, 80333 München (DE)
(72) Erfinder: Lott, Matthias, 82061 Neuried (DE)

(57) **Zusammenfassung**

In dem erfindungsgemäßen Verfahren zur Signalübertragung in einem Funk-Kommunikationssystem mit einem aus einer Anzahl von Unter-Frequenzbändern bestehenden Frequenzband, wird für die Übertragung von zwischen einer ersten Station (AP) des Funk-Kommunikationssystems über zumindest eine zweite Station (FHMN1,FHMN2) zu einer dritten Station (MN3) zu übertragende Daten auf einer ersten Übertragungsstrecke (MH area 1,MH area 2) von der ersten Station (AP) zu der zweiten Station (FMHN1,FHMN2) zumindest ein erstes Unter-Frequenzband (MH1,MH2) der Anzahl Unter-Frequenzbänder, und für die Übertragung der Daten auf einer zweiten Übertragungsstrecke (SH area 3) von der zweiten Station (FMHN1,FHMN2) zu zumindest der dritten Station (MN3) zumindest ein von dem ersten Unter-Frequenzband disjunktes zweites Unter-Frequenzband (SH1,SH2,SH3) der Anzahl Unter-Frequenzbänder genutzt.

## Beschreibung

Die Erfindung betrifft ein Verfahren zur Signalübertragung in einem Funk-Kommunikationssystem, insbesondere bei Verwendung von Mehrfachsprungverfahren.

Zukünftige Funksysteme werden sehr hohe Datenraten unterstützen, um beispielsweise multimediale Anwendungen mit einer erforderlichen Dienstgüte bedienen zu können. Es ist zudem eine weiter zunehmende Anzahl Teilnehmerzahl zu erwarten, so dass weitere und breitere Frequenzbänder für die Nutzung durch Funksysteme erschlossen werden müssen.

In Funksystemen werden verschiedene Verfahren zur Ressourcenaufteilung und zum Multiplexen verwendet. Neben einem Multiplexen im Zeitbereich (Time Division Multiplex, TDM) und Codebereich (Code Division Multiplex, CDM) werden verschiedene Frequenzkanäle durch das FDM-Verfahren (Frequency Division Multiplex) realisiert. Bei dem FDM-Verfahren wird ein breites Frequenzspektrum in viele, im Frequenzbereich getrennte Frequenzkanäle mit jeweils schmaler Bandbreite aufgeteilt, wodurch ein durch die Abstände der Trägerfrequenzen definiertes Frequenzkanalraster entsteht. Vorteilhaft können hierdurch gleichzeitig mehrere Teilnehmer auf unterschiedlichen Frequenzkanälen bedient und die Ressourcen besser individuellen Bedürfnissen der Teilnehmer angepasst werden. Ein ausreichender Abstand zwischen den Frequenzkanälen stellt dabei sicher, dass Störungen zwischen den Kanälen verringert und kontrolliert werden können.

Zukünftige Funk-Kommunikationssysteme werden zunehmend die so genannte OFDM-Übertragung (Orthogonal Frequency Division Multiplexing) nutzen, dies kann in Erweiterung der bestehenden Systeme der dritten Generation, beispielsweise UMTS, oder als eigenständige Systeme erfolgen. Dabei wird das OFDM-Übertragungsverfahren beispielsweise auch mit dem FDM-Verfahren zum so genannten OFDMA verbunden. Weiterhin wird zur Erweiterung der Abdeckung durch die Systeme, zur Erhöhung der Flexibilität sowie zur Minimierung der erforderlichen Netzkomponenten der Einsatz von so genannten Mehrfachsprungverfahren (engl. multi-hop) in Erwägung gezogen.

Zur Realisierung von sehr hohen Datenraten sind, wie oben erwähnt, Frequenzbänder mit großer Frequenzbreite, beispielsweise bis zu 100 MHz, erforderlich. Diese Voraussetzung kann jedoch dazu führen, dass jedem Betreiber eines solchen Systems nur ein Frequenzband zur Verfügung steht, in dem der gesamte Datenverkehr übertragen werden muss. Entsprechend wäre der Frequenzwiederholabstand 1, d.h. in allen Funkzellen des Systems wird das gleiche Frequenzband genutzt.

Ansätze, oben beschriebene OFDM-Übertragungsverfahren und Mehrfachsprungverfahren zu kombinieren, sind derzeit nicht bekannt. Ein Einsatz von OFDMA in dem IEEE 802.16a-Standard ist derzeit beispielsweise nur für den PMP-Modus (Point-to-Multipoint), jedoch nicht für den so genannten Mesh-Mode (engl. Maschen), der ein Mehrfachsprungverfahren unterstützen soll, vorgesehen. Vielmehr wird eine starre Trennung zwischen den Frequenzbändern und Übertragungsverfahren vorgeschlagen, beispielsweise derart, dass für die Mehrfachsprung-Übertragung bis zum letzten Sprung der IEEE 802.16- und für den letzten Sprung der IEEE 802.11-WLAN-Standard verwendet wird.

Eine entsprechende Trennung wird für die europäischen ETSI/HIPERMAN- und ETSI-BRAN/HIPERLAN/2-Standards angedacht.

Aufgabe der Erfindung ist es, in einem Funk-Kommunikationssystem mit einem Mehrfachsprungverfahrens eine möglichst effiziente Nutzung zur Verfügung stehender Funkressourcen zu ermöglichen. Diese Aufgabe wird durch die Merkmale der unabhängigen Patentansprüche gelöst. Weiterbildungen der Erfindung sind jeweils abhängigen Patentansprüchen entnehmbar.

Erfindungsgemäß erfolgt eine Datenübertragung zwischen einer ersten und einer dritten Station unter Verwendung einer zwischengeschalteten zweiten Station derart, dass die Datenübertragung zwischen der ersten und der zweiten, und zwischen der zweiten und der dritten Station in disjunkten Unter-Frequenzbändern eines Frequenzbandes erfolgt. In die Praxis übertragen würde dies bedeuten, dass sowohl für den Mehrfachsprung, d.h. von der ersten zur zweiten Station bzw. von einem Access Point bzw. einer Basisstation zu einer Relais-Station, als auch für den letzten Sprung, d.h. von der zweiten zur dritten Station bzw. von der Relais-Station zu einem mobile Knoten, Unter-Frequenzbänder des gleichen Frequenzbandes verwendet werden. Vorteilhaft ist hierdurch lediglich ein Frequenzband erforderlich.

In einer Ausgestaltung der Erfindung erfolgt die Zuteilung der Unter-Frequenzbänder zu den jeweiligen Übertragungsstrecken dynamisch, beispielsweise abhängig von einer aktuellen Übertragungslast auf den Übertragungsstrecken. Hierdurch wird das Frequenzband vorteilhaft in flexibler und optimaler Weise genutzt.

Einer weiteren Ausgestaltung der Erfindung zufolge erfolgt die Zuteilung der Unter-Frequenzbänder zu den Übertragungsstrecken durch die erste Station. Wiederum in das oben genannte Beispiel übertragen bedeutet dies, dass der Access Point bzw. die Basisstation die Steuerung der Ressourcenzuteilung durchführt.

Nachfolgend wird die Erfindung anhand von Ausführungsbeispielen näher erläutert. Es zeigen dabei
- FIG 1: eine dynamische Zuteilung von Unter-Frequenzbändern zu Übertragungsstrecken,
- FIG 2: eine beispielhafte Systemkonfiguration bei Verwendung eines Mehrfachsprungverfahrens, und
- FIG 3: eine beispielhafte Systemkonfiguration sowie eine Zuteilung von Unter-Frequenzbändern zu Übertragungsstrecken.

Die nachfolgenden Beispiele gehen von einer OFDMA-basierten Funkschnittstelle sowie der ausschließlichen Nutzung eines gemeinsamen Frequenzspektrums bestehend aus Nc-Unterträgern aus, ohne jedoch hierauf beschränkt zu sein. Die Übertragung in Aufwärts- und Abwärtsrichtung erfolgt gemäß einem Zeitduplex-Verfahren (TDD - Time Division Duplex) in gemeinsamen Unterfrequenzbändern. In gleicher Weise kann jedoch auch ein Frequenzduplex-Verfahren (FDD - Frequency Division Duplex) eingesetzt werden.

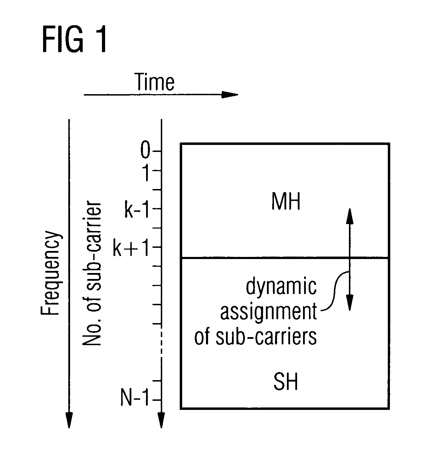

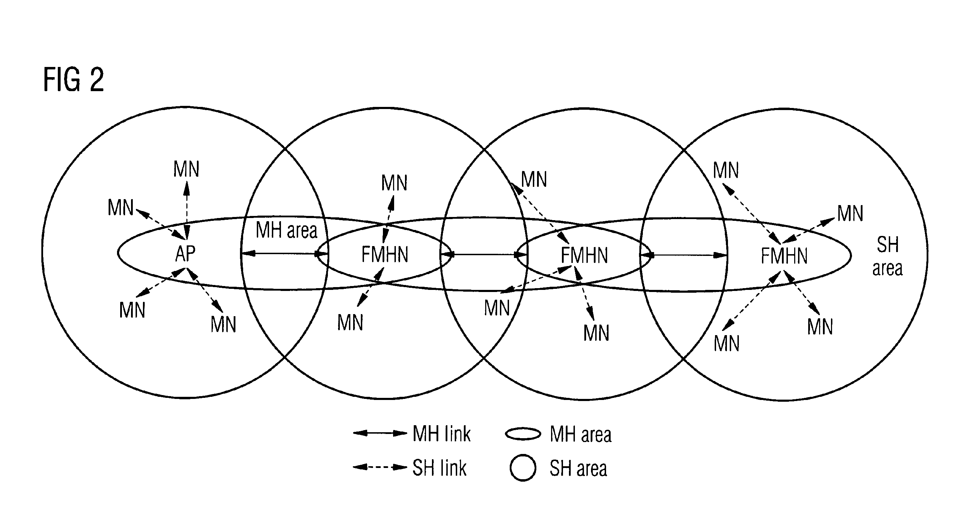

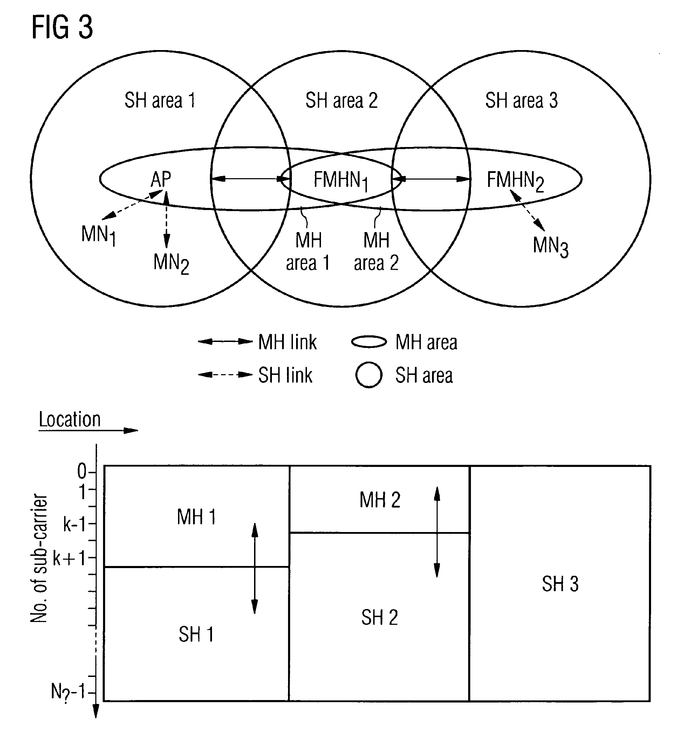

Die erfindungsgemäße Zuteilung bzw. Zuweisung (engl. assignment) von disjunkten, durch Unterträger sub-carrier definierten Unter-Frequenzbändern zu Mehrfachsprung-Übertragungen MH (multi-hop) und Einfachsprung-Übertragungen SH (single-hop) ist beispielhaft in FIG 1 dargestellt. Ein breitbandiges Frequenzspektrum ist in eine Anzahl Nc Unterträger sub-carrier aufgeteilt. Diese Unterträger können, wie nachfolgend zu den FIG 2 und 3 beschrieben wird, dynamisch (dynamic assignment of sub-carriers) für Datenübertragungen mit mehreren Sprüngen und für Datenübertragungen mit einfachen Sprüngen sowie Kombinationen dieser Übertragungen zugeteilt bzw. genutzt werden, wobei die Datenübertragungen in disjunkten Unter-Frequenzbändern erfolgen. Dies kann in der dargestellten Weise einer Trennung in zwei benachbarte Blöcke von Unterträgern, einen für die Mehrfachsprung-Übertragung MH und einen für die Einfachsprung-Übertragung SH, erfolgen, wodurch zwei logische breitbandige Unter-Frequenzbänder geschaffen werden. Alternativ ist jedoch auch eine Vielzahl von Blöcken mit einer jeweils geringen Anzahl Unterträger innerhalb des gesamten Frequenzbandes realisierbar.

Die Eigenschaften des OFDMA ermöglichen eine Umsetzung der dynamischen und flexiblen Zuteilung durch eine Zuteilung von unterschiedlichen Unterträgern zu verschiedenen Teilnehmern und/oder Verbindungen. Im Beispiel der FIG 1 wird beispielsweise für die Mehrfachsprung-Übertragung MH ein Block mit Unter-Frequenzbändern in höheren Frequenzen zugeteilt bzw. genutzt, währenddessen für die Einfachsprung-Übertragung SH ein Block mit Unter-Frequenzbändern in niedrigeren Frequenzen zugeteilt bzw. genutzt wird. Dies ist insbesondere vorteilhaft, da Einfachsprung-Übertragungen in vielen Fällen von mobilen Knoten, beispielsweise Teilnehmer-Endgeräte, ausgehen. Durch die Nutzung niedrigerer Frequenzen kann die Sendeleistung bei gleicher Reichweite verringert und damit der Energieverbrauch gesenkt werden. Da die in Mehrfachsprung-Übertragung involvierten Stationen nach den nachfolgenden Beispielen mit einer ausreichenden Energiezufuhr ausgestattete Basisstationen bzw. stationäre oder mobile Relaisstationen sind, kommt der Verringerung der Sendeleistung und damit des Energieverbrauchs eine geringere Bedeutung zu, weshalb sie entsprechend für Übertragungen in höheren Frequenzen eingesetzt werden.

In der FIG 2 ist beispielhaft eine Systemkonfiguration mit sowohl Mehrfachsprung- als auch Einfachsprung-Übertragungen von Daten dargestellt. Ein Netzzugangspunkt AP (engl. Access Point) bzw. Basisstation ist mit dem Festnetz, beispielsweise dem UMTS-Kernnetz oder dem Internet, verbunden. Der Netzzugangspunkt AP versorgt eine Funkzelle mit funktechnischen Ressourcen, d.h. mobile Knoten MN (engl. Mobile Nodes) kommunizieren unter Nutzung dieser Ressourcen direkt mit dem Netzzugangspunkt AP. Dies ist durch die gestrichelten Pfeile SH link zwischen den mobilen Knoten MN und dem Netzzugangspunkt AP verdeutlicht. Im Kontext der Erfindung wird die Funkzelle auch als Einfachsprung-Gebiet SH area (engl. single-hop area) bezeichnet, da eine direkte Datenübertragung ohne Nutzung zwischengeschalteter Relaisstationen, d.h. nur ein Sprung, erfolgt. Die mobilen Knoten MN können sowohl über den Netzzugangspunkt AP Daten von dem Kernnetz empfangen oder in das Kernnetz senden, als auch ohne Involvierung des Kernnetzes direkt miteinander über den Netzzugangspunkt AP kommunizieren.

Neben der direkten Datenübertragung zu mobilen Knoten im versorgten Einfachsprung-Gebiet SH area kann der Netzzugangspunkt AP Daten zu Stationen übertragen, die diese zu mobilen Knoten MN in dem von ihnen versorgten Einfachsprung-Gebieten SH weiterleiten. Diese ortsfesten oder mobilen Relaisstationen werden in den FIG 2 und 3 als feste Mehrfachsprung-Knoten FMHN (engl. Fixed Multi-hop Nodes) bezeichnet. Der Datenaustausch, durch die Pfeile MH link verdeutlicht, zwischen dem Netzzugangspunkt AP und den Relaisstationen bzw. zwischen den Relaisstationen erfolgt innerhalb eines jeweiligen Mehrfachsprung-Gebietes MH area (engl. multi-hop area). So erfolgt beispielsweise eine Übertragung von Daten aus dem Internet zu einem mobilen Knoten in dem ganz rechten Einfachsprung-Gebiet SH area der FIG 2 von dem Netzzugangspunkt AP über insgesamt drei Mehrfachsprung-Knoten FMHN, wobei für jeden Sprung eine unterschiedliche Konfiguration der Nutzung der zur Verfügung stehenden Unter-Frequenzbänder für Mehrfachsprung- und Einfachsprung-Übertragung existieren kann, wie es bezugnehmend auf FIG 3 nachfolgend beschrieben wird.

In FIG 3 ist eine gegenüber der FIG 2 vereinfachte Netzkonfiguration zur Erläuterung des erfindungsgemäßen Verfahrens dargestellt. Ein Netzzugangspunkt AP sowie zwei Mehrfachsprung-Knoten FMHN1, FMHN2 versorgen jeweils ein Einfachsprung-Gebiet SH area 1 bis SH area 3, die einer jeweiligen Funkzelle der Stationen entsprechen. In dem Einfachsprung-Gebiet SH area 1 des Netzzugangspunktes AP befinden sich zwei mobile Knoten MN1 und MN2. Weiterhin befindet sich in dem Einfachsprung-Gebiet SH area 3 des zweiten Mehrfachsprung-Knotens FMHN2 ein dritter mobiler Knoten MN3. Zwischen dem Netzzugangspunkt AP und dem ersten Mehrfachsprung-Knoten FMHN1 sowie zwischen der ersten FMHN1 und dem zweiten Mehrfachsprung-Knoten FMHN2 befinden sich weiterhin Mehrfachsprung-Gebiete MH area 1 bzw. MH area 2, in denen die Mehrfachsprung-Übertragung von Daten erfolgt. Der untere Teil der FIG 3 zeigt eine beispielhafte Zuteilung von Unterträgern sub-carrier zu den jeweiligen Gebieten.

Es sei angenommen, dass die sich in der Funkzelle des Netzzugangspunktes AP befindenden erster MN1 und zweiter mobiler Knoten MN2 untereinander über den Netzzugangspunkt AP Daten austauschen. Für diesen Datenaustausch zwischen dem Netzzu-gangspunkt und den beiden mobilen Knoten teilt der Netzzugangspunkt den mobilen Knoten eine Anzahl von Unterträgern aus der gesamten Anzahl Nc zur Verfügung stehender Unterträger zu, wobei den Verbindungen SH link zwischen dem Netzzugangspunkt und den mobilen Knoten jeweils unterschiedliche Unterträger zugeteilt werden. Der durch die Anzahl Unterträger definierte Block für Einfachsprung-Übertragung ist in der FIG 3 mit SH 1 bezeichnet. Statt miteinander zu kommunizieren ist in gleicher Weise ein Datenaustausch der mobilen Knoten über den Netzzugangspunkt beispielsweise mit dem Internet denkbar.

Die restliche Anzahl Unterträger der gesamten Anzahl Nc Unterträger ist entsprechend für eine bidirektionale Mehrfachsprung-Übertragung MH link von/zu dem benachbarten ersten Mehrfachsprung-Knoten FMHN1 nutzbar. Die Anzahl der jeweils der Einfachsprung-Übertragung und der Mehrfachsprung-Übertragung zugeteilten Trägerfrequenzen bzw. die Breite der Frequenzbänder der beiden Blöcke SH 1 und MH 1 ist dynamisch variierbar, was in der FIG 3 durch die Pfeile auf der Trennlinie zwischen den Blöcken MH 1 und SH 1 beispielhaft dargestellt ist. Die Variation bzw. Änderung der Zuteilung kann dabei beispielsweise abhängig von der Verkehrslast auf den jeweiligen Übertragungsstrecken gesteuert werden. Sind beispielsweise alle in den Funkzellen befindlichen mobilen Knoten mit dem Internet verbunden, so muss für die Mehrfachsprung-Übertragung eine größere Anzahl Unterträger als für die Einfachsprung-Übertragung zwischen den mobilen Knoten einer Funkzelle zugeteilt werden.

Es sei weiterhin angenommen, dass zu dem dritten mobilen Knoten MN3 im Einfachsprung-Gebiet SH area 3 des zweiten Mehrfachsprung-Knotens FMHN2 Daten aus dem Internet übertragen werden sollen. Nach Empfang der für den dritten mobilen Knoten MN3 vorgesehenen Daten aus dem Internet überträgt der Netzzugangsknoten AP diese unter Nutzung zumindest eines Teils der Unter-Frequenzbänder des Blocks MH 1 zu dem ersten Mehrfachsprung-Knoten FMHN1. Dieser erste Mehrfachsprung-Knoten FMHN1 wiederum überträgt die Daten in zumindest einem Teil der Unter-Frequenzbänder des Blocks MH 2 zu dem zweiten Mehrfachsprung-Knoten FMHN2. Der für diese Datenübertragung nicht benötigte Block Unterträger SH 2 kann in der Funkzelle des ersten Mehrfachsprung-Knoten FMHN1 für Datenübertragungen von/zu bzw. zwischen nicht dargestellten mobilen Knoten zugeteilt werden. Da keine weitere Mehrfachsprung-Übertragungen zu weiteren Mehrfachsprung-Knoten erforderlich ist bzw. der zweite Mehrfachsprung-Knoten FMHN2 der letzte mit dem Netzzugangsknoten AP verbindbare Knoten ist, kann aus dem beispielhaft alle Nc Unterträger umfassenden Block SH 3 eine Anzahl Unterträger für die Übertragung der Internet-Daten auf dem Einfachsprung SH link zu dem dritten mobilen Knoten MN3 genutzt werden.

Alle weiteren, nicht genutzten Unterträger des Blocks SH 3 können beispielsweise nicht dargestellte weitere mobile Knoten für einen Datenaustausch untereinander nutzen. Dabei muss die Zuteilung der Ressourcen nicht zwingend zentral durch den Netzzugangspunkt AP erfolgen, vielmehr ist auch eine autonome Wahl von nicht genutzten Unterträgern nach bekannten Verfahren durch die mobilen Knoten und/oder durch die Mehrfachsprung-Knoten denkbar. Gleiches gilt für den vorangehend beschriebenen Datenaustausch zwischen den mobilen Knoten MN1 und MN2 in der Funkzelle des Netzzugangsknotens AP.

Allgemein kann festgestellt werden, dass aufgrund der Übertragung und Verteilung von Daten in Abwärtsrichtung von dem Netzzugangspunkt zu Einfachsprung-Gebieten und der aggregierten Übertragung von den mobilen Knoten zu dem Netzzugangspunkt in Aufwärtsrichtung der Bedarf an Subträgern für Mehrfachsprung-Übertragungen mit der Nähe zum Netzzugangspunkt steigt. Dieser Erkenntnis wird in dem Beispiel der FIG 3 Rechnung getragen, indem eine größere Anzahl Subträger für die Block MH 1 als für den Block MH 2 zugeteilt wird. Jedoch kann von dieser Konfiguration abgewichen werden, wenn beispielsweise ein starker lokaler Datenaustausch ohne Involvierung des Netzzugangspunktes auftritt.

Weiterhin wird in der Regel für die Mehrfachsprung-Übertragung eine Sichtverbindung (engl. Line-of-Sight) zwischen den fest installierten Komponenten Netzzugangspunkt und ersten Mehrfachsprung-Knoten bzw. zwischen dem ersten und zweiten Mehrfachsprung-Knoten existieren. In diesem Fall kann die Übertragung über diese Übertragungsstrecken mit einer höheren Datenrate als für die Einfachsprung-Übertragung erfolgen, da diese Verbindungen geringeren Störungen unterliegen und daher mit geringerem Fehlerschutz kodiert werden können. Alternativ oder ergänzend ist auch eine Nutzung von Antennen mit hohem Antennengewinn, beispielsweise durch gezielte Ausrichtung auf den nächsten Knoten im Sinne direktionaler Antennen, möglich. Aus der höheren Datenrate folgend ist eine geringere Anzahl von Unter-Frequenzbändern gegenüber der Einfachsprung-Übertragung erforderlich.

Die Implementierung des erfindungsgemäßen Verfahrens kann durch spezifische Protokolle für die Mehrfachsprung- und die Einfachsprung-Übertragung, basierend auf einer gemeinsamen physikalischen Schicht, erfolgen. Vorteilhaft können diese Protokolle unabhängig voneinander den spezifischen Anforderungen und Anwendungsgebiete angepasst werden.

Weiterhin wird durch die Erfindung eine flexible und schnelle Reaktion auf Ressourcen-Anforderungen für Einfachsprung-Übertragungen mit einem großen Protokoll-Überhang von den Mehrfachsprung-Gebieten unterstützt. Diesem steht eine sich nur langsam verändernde Ressourcenzuteilung für die Mehrfachsprung-Übertragung mit einem geringen Protokoll-Überhang gegenüber. Die nur geringe Dynamik bzw. langsame Änderung der Ressourcenzuteilung für die Mehrfachsprung-Übertragung wird durch ein Multiplexen der Vielzahl von Datenströmen der mobilen Knoten auf den Mehrfachsprung-Übertragungsstrecken begründet. Das Multiplexen der Datenströme führt zu einem so genannten Multiplex-Gewinn, und daraus folgend zu einer optimierten Nutzung der zur Verfügung stehenden Ressourcen bzw. Unter-Frequenzbänder.

Vorteilhaft wird zur optimalen Nutzung der zur Verfügung stehenden Unter-Frequenzbänder die Datenrate für die jeweiligen Teilnehmer bzw. mobilen Knoten über das gesamte System konstant gehalten. Dies kann beispielsweise durch eine adaptive Anpassung der Funkzellgröße und damit der Anzahl der darin befindlichen mobilen Knoten erreicht werden. Die Funkzelle des letzten Mehrfachsprung-Knotens, FMHN2 in FIG 3, wäre entsprechend größer als die Funkzellen der bezüglich des Netzzugangspunktes örtlich davor liegenden Mehrfachsprung-Knoten, FMHN1 in FIG 3, bzw. des Netzzugangspunktes selbst zu dimensionieren.

## Patentansprüche

1. Verfahren zur Signalübertragung in einem Funk-Kommunikationssystem mit einem aus einer Anzahl von Unter-Frequenzbändern bestehenden Frequenzband, bei dem
für die Übertragung von zwischen einer ersten Station (AP) des Funk-Kommunikationssystems über zumindest eine zweite Station (FHMN1, FHMN2) zu einer dritten Station (MN3) zu übertragende Daten auf einer ersten Übertragungsstrecke (MH area 1, MH area 2) von der ersten Station (AP) zu der zweiten Station (FMHN1, FHMN2) zumindest ein erstes Unter-Frequenzband der Anzahl Unter-Frequenzbänder genutzt wird, und
für die Übertragung der Daten auf einer zweiten Übertragungsstrecke (SH area 3) von der zweiten Station (FMHN1, FHMN2) zu zumindest der dritten Station (MN3) zumindest ein von dem ersten Unter-Frequenzband disjunktes zweites Unter-Frequenzband der Anzahl Unter-Frequenzbänder genutzt wird.

2. Verfahren nach Anspruch 1, bei dem
die Unter-Frequenzbänder der Anzahl Unter-Frequenzbänder abhängig von einem aktuellen Bedarf auf der jeweiligen Übertragungsstrecke (MH area 1, MH area 2, SH area 3) zwischen den Stationen dynamisch zugeteilt wird.

3. Verfahren nach Anspruch 1 oder 2, bei dem
die Zuteilung der Unter-Frequenzbänder zu den jeweiligen Übertragungsstrecken (MH area 1, MH area 2, SH area 3) zwischen den Stationen durch die erste Station (AP) gesteuert wird.

4. Verfahren nach dem vorhergehenden Anspruch, wobei
die erste Station (AP) als ein mit Netzkomponenten des Funk-Kommunikationssystems direkt verbundenen Netzzugangsknoten oder als eine Basisstation ausgestaltet ist.

5. Verfahren nach einem vorhergehenden Anspruch, wobei
die zweite Station (FHMN1, FHMN2) als ein fest installierter oder mobiler Mehrfachsprung-Knoten ausgestaltet ist.

6. Verfahren nach einem vorhergehenden Anspruch, bei dem
die Signalübertragung auf den Übertragungsstrecken (MH area 1, MH area 2, SH area 3) jeweils gemäß einem OFDM-Verfahren erfolgt.

7. Verfahren nach einem vorhergehenden Anspruch, bei dem
für eine Übertragung von Daten von der dritten Station (MN3) zu der ersten Station (AP) die gleichen Unter-Frequenzbänder genutzt werden, wobei die Übertragung von Daten zwischen Stationen gemäß einem Zeitduplexverfahren erfolgt.

8. Funk-Kommunikationssystem, mit zumindest einer ersten Station (AP) mit Mitteln zum Übertragen von Daten zu zumindest einer zweiten Station (FMHN1, FHMN2) in zumindest einem ersten Unter-Frequenzband eines aus einer Anzahl von Unter-Frequenzbändern bestehenden Frequenzbandes, und mit zumindest der zweiten Station (FMHN1, FHMN2) mit Mitteln zum Empfangen der Daten von der ersten Station (AP) und zum Übertragen der Daten zu zumindest einer dritten Station (MN3) in zumindest einem von dem ersten Unter-Frequenzband disjunkten zweiten Unter-Frequenzband der Anzahl Unter-Frequenbänder.

9. Funk-Kommunikationssystem, wobei
die erste Station (AP) Mittel zum Zuteilen der Anzahl Unter-Frequenzbänder aufweist.

10. Funk-Kommunikationssystem, wobei
die erste Station (AP) als eine Basisstation und/oder ein Netzzugangsknoten, und die zweite Station (FMHN) als ein Mehrfachsprung-Knoten ausgestaltet sind.

11. Station eines Funk-Kommunikationssystems, mit
Mitteln zum Empfangen von von einer zweiten Station (AP) in zumindest einem ersten Unter-Frequenzband eines aus einer Anzahl von Unter-Frequenzbändern bestehenden Frequenzbandes übertragenen Daten, und
Mitteln zum Übertragen der Daten zu zumindest einer dritten Station (MN3) in zumindest einem von dem ersten Unter-Frequenzband disjunkten zweiten Unter-Frequenzband der Anzahl Unter-Frequenbänder.

12. Station nach Anspruch 11, die als ein Mehrfachsprung-Knoten (FMHN1, FMHN2) ausgestaltet ist.
